Europäisches Patentamt

European Patent Office

Office européen des brevets

(11) Publication number: **0 205 755**
**B1**

(12) **EUROPEAN PATENT SPECIFICATION**

(45) Date of publication of patent specification: **07.06.89**

(21) Application number: **86102985.8**

(22) Date of filing: **06.03.86**

(51) Int. Cl.⁴: **F 01 N 3/02**

(54) Exhaust gas filter for diesel engine.

(30) Priority: **08.03.85 JP 47195/85**
**08.03.85 JP 47196/85**

(43) Date of publication of application:
**30.12.86 Bulletin 86/52**

(45) Publication of the grant of the patent:
**07.06.89 Bulletin 89/23**

(84) Designated Contracting States:
**DE FR GB**

(56) References cited:
**EP-A-0 035 053**
**EP-A-0 087 067**
**EP-A-0 089 756**
**US-A-4 294 806**
**US-A-4 451 517**
**US-A-4 478 618**

(73) Proprietor: **Matsushita Electric Industrial Co., Ltd.**
**1006, Oaza Kadoma**
**Kadoma-shi Osaka-fu, 571 (JP)**

(72) Inventor: **Nakamoto, Mitsuyoshi**
**2826-1, Nimyo-cho**
**Nara-shi Nara-ken (JP)**
Inventor: **Kusuda, Takao**
**7-32, Higashiyama-cho**
**Ashiya-shi Hyogo-ken (JP)**
Inventor: **Yonemura, Masaaki**
**8-56, Chiyogaoka 2-chome**
**Nara-shi Nara-ken (JP)**
Inventor: **Shinmura, Koichi**
**Hayabuchi-So 202, 2-21-9, Hayamiya**
**Nerima-ku Tokyo-to (JP)**

(74) Representative: **Eisenführ & Speiser**
**Martinistrasse 24**
**D-2800 Bremen 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to an exhaust gas filter for a diesel engine of the kind mentioned in the pre-characterizing portion of claim 1, and to a method for making same.

In order to collect carbon soot exhausted from a diesel engine, the following exhaust gas filters for a diesel engine have conventionally been designed: a filter made from metal wire mesh coated with alumina, a foamed ceramic filter having a porous structure made by a foaming agent to the ceramic, a ceramic fiber mat, and a honeycomb shaped ceramic monolith filter. In these, because the honeycomb shaped ceramic monolith filter is approximately 90% efficient for soot collection and has a low pressure drop, the filter is expected to be effective for removing carbon soot in exhaust gas. Such a filter is known from EP—A—0087067 and referred to in the pre-characterizing portions of claims 1 and 8. In general, a ceramic monolith filter for diesel engine exhaust gas is of a honeycomb structure comprising a plurality of cells produced by an extrusion process. Each opening at both ends of the honeycomb cell structure, located at upstream and downstream sides of the exhaust gas, is alternately clogged with a material like cement, which has a very small porosity. That is, one cell channel clogged at the upstream side is opened at the downstream side and the other cell channel is conversely clogged, so that each cell channel is distinguished so as either an entrance of exit channel for exhaust gas. As a result, substantially all carbon soot in exhaust gas is collected on the cell walls. From EP—A—0035053, a metal sieve catalyst filter for diesel exhaust gas is known, wherein the ends of alternate channels are closed by ceramic plugs.

The pressure drop of exhaust gas at the filter increases with the increase of the carbon soot deposition on the filter and the engine performance such as durability is adversely affected. Accordingly, in order to maintain good engine performance, the filter requires regeneration by afterburning the deposited carbon soot after the quantity of deposited carbon soot reaches a predetermined value. There has been a long felt need for an exhaust gas filter for a diesel engine having a honeycomb structure, wherein deposited carbon soot is forced to ignite, burn and propagate, and burn up completely, so that the filter is easily and repeatedly renewed.

To solve such a problem as described hereinabove, the present invention is to provide an exhaust gas filter for a diesel engine according to claim 1 and a method for manufacturing this exhaust gasf ilter, according to claim 8.

In a preferred embodiment, a narrow portion is provided at each entrance or exit portion of the exhaust gas channel in an exhaust gas filter for a diesel engine, and in addition, a plurality of grooves are provided at the filter entrance wall surface being exposed to exhaust gas. The invention allows even small quantities of carbon soot deposition to reliably ignite, the subsequent combustion to propagate, and the soot to completely burn up.

These and other objects and features of the present invention will become clear from the following description taken in conjunction with preferred embodiments thereof with reference to the accompanying drawings, in which:

Fig. 1 is a fragmentary schematic perspective view showing an exhaust gas filter for a diesel engine according to an embodiment of the present invention;

Fig. 2 is a sectional view showing an exhaust gas filter for a diesel engine according to an embodiment of the present invention;

Figs. 3(a) and 3(b) are sectional, top and side views showing an exhaust gas filter for a diesel engine according to another embodiment of the present invention;

Fig. 4 is a sectional side view showing an exhaust gas filter for a diesel engine according to the further embodiment of the present invention;

Fig. 5 is a sectional partial view showing an exhaust gas filter for a diesel engine according to the further another embodiment of the present invention; and

Fig. 6 is a fragmentary sectional view of Fig. 5.

Before the description of the present invention proceeds, it is to be noted that like parts are designated by like reference numerals throughout the accompanying drawings.

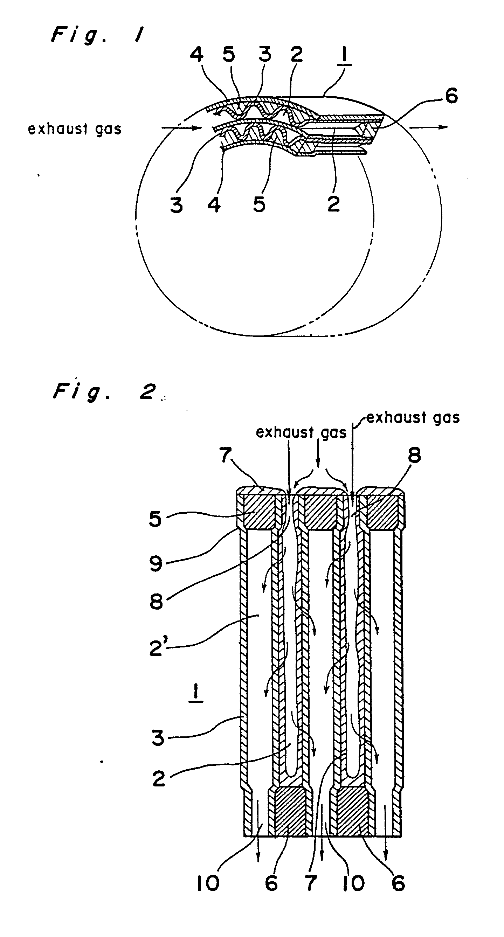

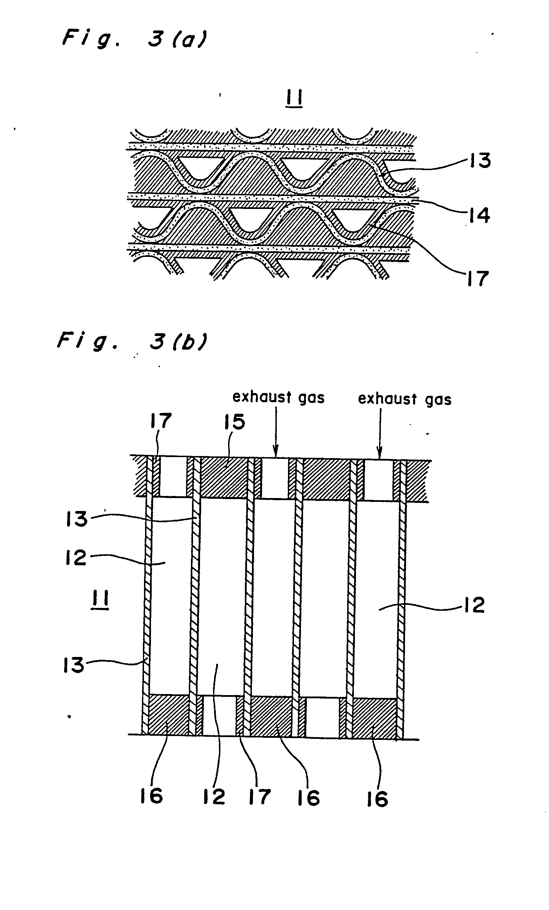

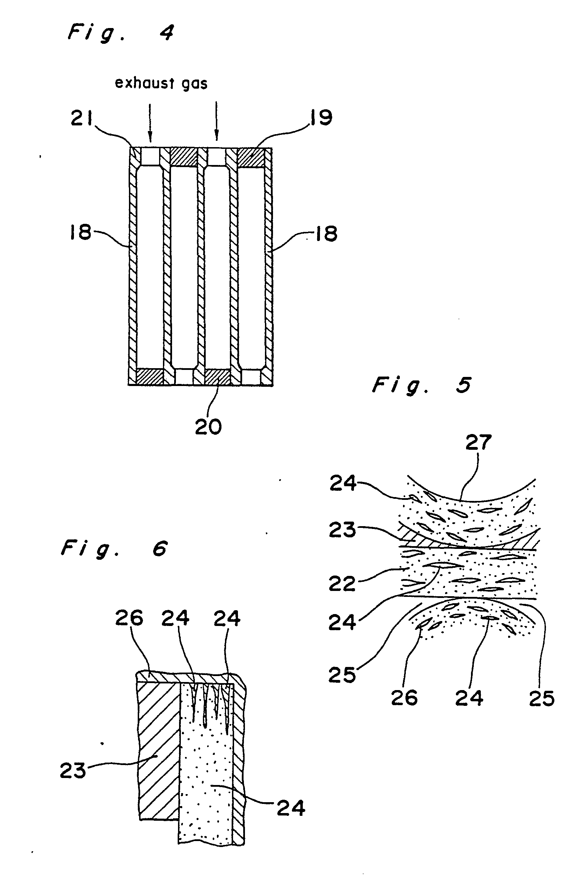

Figs. 1 and 2 are a fragmentary sectional perspective view and a sectional side view, respectively, showing an exhaust gas filter for a diesel engine according to one embodiment of the present invention. In Fig. 1, 1 is an exhaust gas filter; 2, a channel for exhaust gas; 3, a wave-shaped sheet; 4, a plain sheet; 5 and 6, clogging portions each exhaust gas channel at the upstream and downstream sides, respectively. Fig. 2 shows a condition, wherein the plain sheet 4 is removed, and 7 is the carbon soot deposition produced by the exhaust gas passage through the filter. An exhaust gas filter for a diesel engine is produced by the following steps. For example, 30 parts by weight of alumina fiber, cut in lengths shorter than 20 mm, and 16 parts by weight of ceramic bulk powder are suspended in 3000 parts by weight of water. Added to this mixed slurry is an organic binder, such as poly vinyl acetate, and then, the mixture is agglutinated by the addition of coagulant like polyacrylamide. The coagulated slurry is made into sheets by a paper making machine. Next, the produced sheets are formed in wave-shape and plain sheets and bonded into corrugated sheets. The corrugated sheet is wound around a core and joined with adhesives forming a honeycomb structure. The same quantity of the material (described below) is injected into each entrance and exit of the cell channels, which are clogged in such way that the cell channel clogged at the entrance is not clogged at the exit. The other cell channel is conversely clogged so that exhaust gas introduced to one cell channel passes through the cell wall transmitting to another cell channel, and then, is discharged from the honeycomb structure. The assembly is baked in the air at 1250°C to form an objective exhaust gas filter having a honeycomb structure. In this case, the clogging material is a paste made by calcining said sheet and added starch and water. The paste is injected into each entrance and exit of the honeycomb structure and baked after drying. As shown in Fig. 2, a clogging portion 5 at the entrance side of exhaust gas is larger in the sectional area than the exhaust gas channel 2. In order to form this constitution, the clogging material is pressed into said portion to spread the exhaust gas channel before baking the honeycomb assembly, or in another case, the clogging material is injected when the corrugated sheet is wound around the core, and then, the assembly is baked. Accordingly, the entrance portion of the exhaust gas channel at the upstream side is narrowed to form a narrow portion 8. By the above described constitution, exhaust gas flow resistance at the entrance increases and dynamic pressure of exhaust gas in the exhaust gas channel 2 decreases so that the carbon soot 7 deposits uniformly on the channel wall. Moreover, the filter can be sufficiently reactivated by afterburning. Since a large quantity of carbon soot 7 does not deposit in limited cells, there is no local overheating or filter breakdown. By constituting the clogging portion 5 as described above, a step portion 9 of the wave-shaped sheet mainly supports pressure when strong exhaust pressure is applied to the clogging portion from the diesel engine, so that the clogging portion does not break. The plain sheet also forms a step portion and functions as the same way of the wave-shaped sheet. Furthermore, by providing a clogging portion 6 at the rearward exit of an exhaust gas channel which is not clogged at the upstream side entrance, to form a narrow portion 10, carbon soot deposits more uniformly. The narrow portion 8 of the entrance can be reduced in dimension by providing the narrow portion 10 at the exit. The observation about carbon soot ignition reveals that the ignition begins at the upstream side of the filter 1 by high temperature particle contained in the exhaust gas or by igniting means like a glow plug. Then, the carbon soot deposited on the exhaust channel 6 burns and the burning gradually propagates towards the rearward direction of exhaust gas. Fig. 3 shows a second embodiment of the present invention. Fig. 3(a) is a top view and Fig. 3(b) is a sectional side view. In this figure, 11 is an exhaust gas filter; 13 and 14 are a wave-shaped sheet and a plain sheet, respectively, and they constitute the exhaust gas channels; 15 and 16, a clogging portion at upstream and downstream sides of the exhaust gas channel 12; 17, a cylinder provided at the entrance of the exhaust gas channel, which forms a narrow portion shown in Fig. 2. Fig. 4 is a sectional view showing an exhaust gas filter according to a third embodiment of the present invention. As shown in this figure, a thick wall portion 21 is provided at each end of the exhaust gas channel by thickening each corresponding part of the wave-shaped sheet 18 and the plain sheet (not shown in the figure), instead of providing the cylinder 17 shown in Fig. 3. In this figure, 19 and 20 are clogging portions at the entrance and exit sides of each exhaust gas channel, respectively. Fig. 5 shows a fourth embodiment of the present invention. In this figure, 27 is a wave-shaped sheet and 22 is a plain sheet. These sheets are constituted from a porous sintered body of ceramic fibers. A plurality of grooves are provided on the porous sintered body by defibering the ceramic fiber layer or by rapid sintering. Fig. 6 is a fragmentary sectional view of Fig. 5. In this figure, 26 is a deposited carbon soot layer; 23, a clogging portion; 25, an exhaust gas channel. Referring now to Figs. 1 and 2, the exhaust gas flow and the function of the exhaust gas filter are further described. The exhaust gas discharged from a diesel engine is introduced to the clogging portion 5 at the upstream side, the upstream surfaces of the wave-shaped sheet 3 and the plain sheet 4, and the narrow portion 8 at the upstream side. Then, the exhaust gas flows into the exhaust gas channel 2 and transmits to the exhaust gas channel 2′ positioned at the rearward side through the wave-shaped sheet 3 and the plain sheet 4, and then, the gas is discharged from the narrow portion 10 located at the rearward side. The carbon soot contained in the exhaust gas deposits on the upstream side surface of the exhaust gas filter and on the exhaust gas channel wall at the upstream side. In the embodiments shown in Figs. 5 and 6, the carbon soot also deposits in the groove 24, improving the filtering performance. That is, the deposited carbon soot ignites at the upstream side of the exhaust gas filter as described above, so that the deposited carbon soot is easily removed by burning. Next, the removal of deposited carbon soot by burning in this case is described in detail. When the carbon soot deposited at the upstream surface of the exhaust gas filter ignites by an ignition plug or spark in the exhaust gas, the burning of the carbon soot propagates firmly on the clogging portion at the upstream side because larger volume of carbon soot deposits in the grooves than on the surface of clogging portion at the upstream side. Accordingly, the carbon soot deposited in the exhaust gas filter can completely burn out by the above described process. Therefore, even when small quantities of carbon soot deposits, the carbon soot can completely burn in the exhaust gas filter, so that the large quantity deposition of carbon soot without ignition or the filter breakdown caused by abnormally high temperatures can be prevented. In addition, a simple means like a ignition plug permits wide range burning propagation on the cell surface at the upstream side of the filter, and carbon soot deposited in the filter burns out completely to renew the filter.

As described above, the exhaust gas filter for a diesel engine according to the present invention permits reliable carbon soot ignition, complete carbon soot burn out and easy filter renewal. More specifically, the carbon soot deposits uniformly on the cell wall by providing narrow portions at the filter exit, thus preventing the filter breakdown caused by local temperature rising. In addition, by forming the narrow portion with a clogging portion larger in area than the entrance or exit of the exhaust gas channel, the clogging portion can provide sufficient strength. When the narrow portion is formed with a cylinder, the sectional area of the narrow portion can be easily reduced so that large quantity of carbon soot can deposit on the cell surface at the upstream side and at the same time, the carbon soot deposits uniformly on the cell wall. The working process of the filter can be shortened by providing a thick wall portion at the cell wall of the narrow portion. When a plurality of grooves are provided on the cell wall surface exposed to the windward direction, a large quantity of carbon soot deposits in the grooves and the carbon soot ignites easily and propagates burning. In addition, when a material, mainly composed of fiber ceramic, is selected for the filter, the grooves can be formed during the filter production process and a particular process for forming the grooves is not required.

## Claims

1. An exhaust gas filter for a diesel engine comprising a corrugated sheet of porous ceramic material bonded to a flat sheet of porous ceramic material which together form a composite sheet, the composite sheet being wound in overlapping layers to form a honeycomb structure containing a plurality of cell channels formed by spaces between the corrugated sheet and the flat sheet for passage of exhaust gas therethrough, which extend from an upstream end to a downstream end of said honeycomb structure with respect to the direction of flow of exhaust gas through said honeycomb structure, said channels being alternatingly open at said upstream end or said downstream end of said honeycomb structure and being closed at the respective other end, characterized in that a plurality of plugs (5, 6, 15, 16, 19, 20, 23) of porous ceramic material are provided such that every other one of said channels (2') at the upstream end thereof is filled with one of said plugs (5, 15, 19) and every other one of said channels (2) at the downstream end thereof is filled with one of said plugs (6, 16, 20), the opening (8, 10) at one end of each channel (2, 2') having a smaller cross-sectional area than the plugged opening at the other end of the respective channel.

2. Filter according to claim 1, further comprising means for igniting carbon soot deposited on the upstream end of the honeycomb structure.

3. Filter according to claim 2, wherein said igniting means comprises a glow plug.

4. Filter according to any one of claims 1 to 3, wherein walls of said channels (2, 2') surrounding said plugs (5, 6) are expanded radially outwardly by said plugs (5, 6), thereby forming said smaller openings (8, 10).

5. Filter according to any one of claims 1 to 3, wherein the channels have tubular inserts (17) therein forming said smaller openings.

6. Filter according to any one of claims 1 to 3, wherein walls of said channels are thickened (21) and thus form said smaller openings.

7. Filter according to any one of claims 1 to 6, wherein grooves (24) are provided in said upstream end of said honeycomb structure, whereby a larger volume of carbon soot is deposited in said grooves (24) than on said plugs (23) located at said upstream end of said honeycomb structure, thereby facilitating ignition of said carbon soot and propagation of combustion to completely burn up said carbon soot and thus facilitating regeneration of said filter.

8. Method for manufacturing an exhaust gas filter according to any one of claims 1 to 7, comprising:

providing a mixture of ceramic fiber material and binder in the form of a slurry;
forming a corrugated sheet from said slurry;
forming a flat sheet from said slurry;
binding said corrugated sheet to said flat sheet to form a composite sheet with spaces between said corrugated sheet and said flat sheet forming a plurality of cell channels for passage of exhaust gas;
winding said composite sheet in overlapping layers to form a honeycomb structure with said cell channels being open at an upstream end and the downstream end of said honeycomb structure with respect to the direction of flow of exhaust gas through said honeycomb structure; and
providing closure elements alternatingly at the upstream or downstream ends of the channels so that each of said channels is open at either said upstream end or said downstream end of said honeycomb structure, characterized by the steps of inserting plugs (5, 6, 15, 16, 19, 20, 23) of porous ceramic material into openings at either said upstream end or said downstream end of each of said channels; and
baking said honeycomb structure with said plugs therein to form said exhaust gas filter,
every other one of said channels at said upstream end of said honeycomb structure being filled with one of said plugs (5, 15, 19) and every other one of said channels at said downstream end of said honeycomb structure being filled with one of said plugs (6, 16, 20), and
making said non-plugged channel openings smaller in cross-sectional area than the cross-sectional area of said plugged openings.

9. Method according to claim 8, wherein said smaller openings (8, 10) are made by inserting said plugs (5, 6) at one end of the respective channels such that walls of said channels (2, 2') which surround said plugs are expanded radially outwardly by said plugs (5, 6) to thereby form said smaller openings at said end of said channel.

10. Method according to claim 8, wherein said smaller openings are made by inserting tubular inserts (17) in said channels at one end of said honeycomb structure to thereby form said smaller openings at said one end of said honeycomb structure.

11. Method according to claim 8, wherein said smaller openings are made by thickening walls (21) of said channels surrounding said plugs (19, 20) which thereby form said smaller openings in said end of said honeycomb structure.

12. Method according to any one of claims 8 to 11, wherein grooves (24) are formed in said upstream end of said honeycomb structure by defibering a ceramic fiber layer forming said upstream end of said honeycomb structure.

13. Method according to any one of claims 8 to 11, wherein grooves (24) are formed in said upstream end of said honeycomb structure by rapid sintering of said honeycomb structure.

**Patentansprüche**

1. Abgasfilter für einen Dieselmotor, umfassend eine gewellte Bahn aus porösem Keramikmaterial, verbunden mit einer flachen Bahn von porösem Keramikmaterial, die zusammen eine Kompositbahn bilde, wobei die Kompositbahn in überlappenden Schichten zur Ausbildung einer Wabenstruktur aufgewickelt ist, die eine Mehrzahl von Zellkanälen, enthält, welche durch Zwischenräume zwischen der gewellten Bahn und der flachen Bahn zum Durchtritt von Abgas durch sie gebildet werden und sich von einem Aufstromende zu einem Abstromende der Wabenstruktur, bezüglich der Flußrichtung des Abgases durch die Wabenstruktur, erstrekken, wobei die Kanäle alternierend am Aufstromende oder am Abstromende der Wabenstruktur geöffnet und am jeweils anderen Ende geschlossen sind, dadurch gekennzeichnet, daß eine Mehrzahl von Pfropfen (5, 6, 15, 16, 19, 20, 23) aus porösem Keramikmaterial so vorgesehen sind, daß jeder zweite Kanal (2') an seinem Aufstromende mit einem der Pfropfen (5, 15, 19) gefüllt ist und jeder andere der Kanäle (2) an seinem Abstromende mit einem der Pfropfen (6, 16, 20) gefüllt ist, wobei die Öffnung (8, 10) an einem Ende jedes Kanals (2, 2') eine geringere Querschnittsfläche aufweist als die zugepfropfte Öffnung am anderen Ende des jeweiligen Kanals.

2. Filter nach Anspruch 1, weiterhin umfassend Einrichtungen zur Entzündung von am Aufstromende der Wabenstruktur abgelagertem Kohlenstoffruß.

3. Filter nach Anspruch 2, worin die Entzündungseinrichtungen eine Glühkerze umfassen.

4. Filter nach einem der Ansprüche 1 bis 3, worin die die Pfropfen (5, 6) umgebenden Wänder der Kanäle (2, 2') durch die Pfropfen (5, 6) radial auswärts geweitet werden, wodurch die kleineren Öffnungen (8, 10) gebildet werden.

5. Filter nach einem der Ansprüche 1 bis 3, worin die Kanäle rohrartige Einsätze (17) aufweisen, die die kleineren Öffnungen bilden.

6. Filter nach einem der Ansprüche 1 bis 3, worin die Wände der Kanäle verdickt sind (21) und so die kleineren Öffnungen bilden.

7. Filter nach einem der Ansprüche 1 bis 6, wobei in den Aufstromenden der Wabenstruktur Ausnehmungen (24) vorgesehen sind, durch die eine größere Menge Kohlenstoffruß in den Ausnehmungen (24) als auf den Pfröpfen (23) abgeschieden wird, welche am Aufstromende der Wabenstruktur angeordnet sind, wodurch die Entzündung des Kohlenstoffrußes und das Fortschreiten der Verbrennung zum vollständigen Verbrennen des Kohlenstoffrußes erleichtert und so die Regeneration des Filters erleichtert wird.

8. Verfahren zur Herstellung eines Abgasfilters gemäß einem der Ansprüche 1 bis 7, umfassend: Bereitstellung einer Mischung von kreamischem Fasermaterial und Bindemittel in Form eines Schlamms; Formung einer gewellten Bahn aus dem Schlamm; Formung einer flachen Bahn aus dem Schlamm; Verbindung der gewellten Bahn mit der flachen Bahn zur Ausbildung einer Kompositbahn mit Zwischenräumen zwischen der gewellten Bahn und der flachen Bahn, welche eine Merhzahl von Zellkanälen für den Durchtritt von Abgas bilden; Aufwicklung der Kompositbahn in überlappenden Schichten zur Ausbildung einer Wabenstruktur, bei der die Zellkanäle an einem Aufstromende und einem Abstromende der Wabenstruktur, bezüglich der Flußrichtung des Abgases durch die Wabenstruktur, offen sind; und Anordnung von Verschlußelementen alternierend an den Aufstrom- oder Abstromenden der Kanäle, so daß jeder Kanal entweder am Aufstromende oder Abstromende der Wabenstruktur offen ist, gekennzeichnet durch die Schritte des Einsetzens von Pfropfen (5, 6, 15, 16, 19, 20, 23) von porösem Keramikmaterial in die Öffnungen an entweder dem Aufstromende oder dem Abstromende jedes Kanals; und Brennen der Wabenstruktur mit den eingesetzten Pfropfen zur Ausbildung des Abgasfilters, wobei jeder zweite Kanal am Aufstromende der Wabenstruktur mit einem der Pfropfen (5, 15, 19) und jeder andere der Kanäle am Abstromende der Wabenstruktur mit einem de Pfropfen (6, 16, 20) gefüllt ist, und Ausbildung der nicht verpfropften Kanalöffnungen mit kleinerer Querschnittsfläche als die Querschnittsfläche der zugepfropften Öffnungen.

9. Verfahren nach Anspruch 8, worin die kleineren Öffnungen (8, 10) dadurch erhalten werden, daß die Pfropfen (5, 6) an einem Ende der jeweiligen Kanäle so eingesetzt werden, daß Wände der Kanäle (2, 2'), die die Pfropfen umgeben, radial auswärts durch die Pfropfen (5, 6) geweitet werden, um so die kleineren Öffnungen am genannten Ende des Kanals auszubilden.

10. Verfahren nach Anspruch 8, worin die kleineren Öffnungen dadurch ausgebildet werden, daß rohrförmige Einsätze (17) in die Kanäle an einem Ende der Wabenstruktur eingesetzt werden, um so die kleineren Öffnungen an diesem Ende der Wabenstruktur auszubilden.

11. Verfahren nach Anspruch 8, worin die kleineren Öffnungen dadurch ausgebildet werden, daß die die Pfropfen (19, 20) umgebenden Wände (21) der Kanäle verdickt werden, so daß diese die kleineren Öffnungen an diesem Ende der Wabenstruktur bilden.

12. Verfahren nach einem der Ansprüche 8 bis 11, bei dem Ausnehmungen (24) in den Aufstromenden der Wabenstruktur dadurch ausgebildet werden, daß eine keramische Faserschicht, die das Aufstromende der Wabenstruktur bildet, entfasert wird.

13. Verfahren nach einem der Ansprüche 8 bis 11, bei dem Ausnehmungen (24) an den Aufstromenden der Wabenstruktur durch schnelles Sintern der Wabenstruktur ausgebildet werden.

## Revendications

1. Filtre à gaz d'échappement pour un moteur diesel, comprenant une feuille ondulée de matière céramique poreuse assemblée à une feuille plate de matière céramique poreuse, ces feuilles formant ensemble une feuille composite, la feuille composite étant enroulée en couches superposées pour former une structure à nid d'abeilles contenant une pluralité de canaux alvéoles formés par des espaces entre la feuille ondulée et la feuille plate, destinés à donner passage aux gaz d'échappement, et qui s'étendent d'une extrémité amont à une extrémité aval de ladite structure à nid d'abeilles, considéré par rapport au sens de l'écoulement des gaz d'échappement à travers ladite structure à nid d'abeilles, lesdits canaux étant ouverts en alternance à ladite extrémité amont et à ladite extrémité aval de ladite structure à nids d'abeille et étant fermés à l'autre extrémité respective, caractérisé en ce que plusieurs bouchons (5, 6, 15, 16, 19, 20, 23) de matière céramique poreuse sont prévus de telle manière qu'un sur deux desdits canaux (2') soit bouché par l'un desdits bouchons (5, 15, 19) et que, à son extrémité amont un sur deux desdits canaux (2) soit bouché par l'un desdits bouchons (6, 16, 20) à son extrémité aval, l'ouverture (8, 10) prévue à une extrémité de chaque canal (2, 2') ayant une plus petite aire de section que l'ouverture bouchée située à l'autre extrémité du canal respectif.

2. Filtre selon la revendication 1, comprenant en outre des moyens pour enflammer la suie déposée sur l'extrémité amont de la structure à nid d'abeilles.

3. Filtre selon la revendication 2, dans lequel lesdits moyens d'inflammation comprennent une bougie à incandescence.

4. Filtre selon une quelconque des revendications 1 à 3, dans lequel les parois desdits canaux (2, 2') qui entourent lesdits bouchons (5, 6) sont dilatés radialement vers l'extérieur par lesdits bouchons (5, 6), pour former de cette façon lesdites ouvertures plus petites (8, 10).

5. Filtre selon une quelconque des revendications 1 à 3, dans lequel les canaux renferment des insertions tubulaires (17) pour former lesdites ouvertures plus petites.

6. Filtre selon une quelconque des revendications 1 à 3, dans lequel les parois desdits canaux sont épaissies (21) et forment ainsi lesdites ouvertures plus petites.

7. Filtre selon une quelconque des revendications 1 à 6, dans lequel des rainures (24) sont prévues dans ladite extrémité amont de ladite structure à nid d'abeilles, de sorte qu'il se dépose un plus grand volume de suie dans lesdites rainures (24) que sur lesdits bouchons (23) situés à ladite extrémité amont de ladite structure à nid a'beilles, pour faciliter ainsi l'inflammation de ladite suie et la propagation de la combustion, pour brûler entièrement ladite suie, et faciliter ainsi la régénération dudit filtre.

8. Procédé pour fabrique un filtre à gaz d'échappement selon une quelconque des revendications 1 à 7, consistant à:

prépare un mélange de matière fibreuse céranique et de liant sous la forme d'une suspension;

former une feuille ondulée à partir de ladite suspension;

former une feuille plate à partir de ladite suspension; assembler ladite feuille ondulée à ladite feuille plate pour former une feuille composite munie d'espaces situés entre ladite feuille ondulée et ladite feuille plate, et formant une pluralité de canaux alvéoles pour donner passage aux gaz d'échappement;

enrouler ladite feuille composite en couches superposées pour former une structure à nid d'abeilles dans laquelle lesdits canaux alvéoles sont ouverts à l'extrémité amont et à l'extrémité aval de ladite structure à nid d'abeilles, relativement au sens de l'écoulement des gaz d'échappement à travers ladite structure à nid d'abeilles; et

prévoir des éléments de fermeture en alternance aux extrémités amont et aval des canaux de manière que chacun desdits canaux soit ouvert, soit à ladite extrémité amont, soit à ladite extrémité aval de ladite structure à nid d'abeilles, caractérisé par les phases consistant à:

insérer des bouchons (5, 6, 15, 16, 19, 20, 23) de matière céramique poreuse dans les ouvertures situées soit à l'extrémité amont, soit à l'extrémité aval de chacun desdits canaux; et

cuire ladite structure à nid d'abeilles, avec lesdits bouchons à l'intérieur, pour former ledit filtre à gaz d'échappement,

un sur deux desdits canaux, étant bouché à ladite extrémité amont de ladite structure à nid d'abeilles, par l'un desdits bouchons (5, 15, 19) et un sur deux desdits canaux étant bouché à ladite extrémité aval de ladite structure à nid d'abeilles par un desdits bouchons (6, 16, 20); et

faire en sorte que lesdites ouvertures des canaux non bouchés soient plus petits en aire de section que l'aire de section desdites ouvertures bouchées.

9. Procédé selon la revendication 8, dans lequel lesdites ouvertures rendues plus petites (8, 10) sont formées en insérant lesdits bouchons (5, 6) à une extrémité de leurs canaux respectifs de telle manière que les parois desdits canaux (2, 2') qui entourent lesdits bouchons soient dilatées radialement vers l'extérieur par lesdits bouchons (5, 6), pour former de cette façon lesdites ouvertures plus petites à ladite extrémité dudit canal.

10. Procédé selon la revendication 8, dans lequel lesdites ouvertures plus petites sont formées en insérant des insertions tubulaires (17) dans lesdits canaux à une première extrémité de ladite structure à nid d'abeilles pour former de cette façon lesdites ouvertures plus petites à ladite première extrémité de ladite structure à nid d'abeilles.

11. Procédé selon la revendication 8, dans lequel lesdites ouvertures plus petites sont obtenues en épaississant les parois (21) desdits canaux qui entourent lesdits bouchons (19, 20), qui forment de cette façon lesdites ouvertures plus petites dans ladite extrémité de ladite structure à nid d'abeilles.

12. Procédé selon une quelconque des revendications 8 à 11, dans lequel des rainures (24) sont formées dans ladite extrémité amont de ladite structure à nid d'abeilles, par défibrage d'une couche de fibres céramiques formant ladite extrémité amont de ladite structure à nid d'abeilles.

13. Procédé selon une quelconque des revendications 8 à 11, dans lequel des rainures (24) sont formées dans ladite extrémité amont de ladite structure à nid d'abeilles, par frittage rapide de ladite structure à nid d'abeilles.

*Fig. 1*

exhaust gas

*Fig. 2*

exhaust gas exhaust gas

Fig. 3 (a)

<u>11</u>

13

14

17

Fig. 3 (b)

exhaust gas      exhaust gas

17      15

13

12

<u>11</u>

12

13

16      12  17  16      16

# Fig. 4

exhaust gas

# Fig. 5

# Fig. 6